# EUROPEAN PATENT APPLICATION

(11) **EP 4 733 933 A1**
(43) Date of publication of application: **29.04.2026**
(21) Application number: 25191639.1
(22) Date of filing: 24.07.2025
(51) Int. Cl.: G06F 9/451, G06N 20/00, G06N 3/08

(54) **USER INTERFACE ELEMENTS DESCRIPTOR AND POPULATION FOR THE GENERATION OF LLM INSIGHT**

(30) Priority: 24.10.2024 US 202418926257
(71) Applicant: Intuit Inc., Mountain View, CA 94043 (US)
(72) Inventor: SYED, Waseem, Mountain View, 94043 (US)
(74) Representative: D Young & Co LLP

(57) **Abstract**

A method includes obtaining multiple user interface (UI) elements by a UI generator. A set of descriptors is added to the UI elements. The UI elements are further populated with data values. A UI document including the populated UI elements with descriptors is transmitted to a client application and rendered on a user interface. A prompt is generated based on the descriptors, and the data of the UI elements. The prompt is processed by the LLM to generate an insight based on the prompt. The insight is transmitted to the client application to be rendered on the user interface.

## Description

### BACKGROUND

In a traditional client-server computing model, the client application is responsible for providing the structure and content of a user interface to display to a user of the client application, based on data received from a server. In another approach known as server-driven user interface (UI), the server dictates the structure and content of the user interface rather than the client-side application. Server-driven UI refers to a computing methodology in which the layout, screen widgets, and content of the user interface presented to a user of the client application are generated on a server application, and executing remotely with respect to the client application. Server-driven UI deploys a component-based approach, in which the server application defines individual UI components, known as elements, and their arrangement. The UI elements are then rendered by the client application based on the server's instructions.

In the context of a server-driven UI approach, a derived context application refers to an application where the UI is dynamically constructed based on instructions received from the server. In other words, the application derives the context of the UI from the server instructions. Thus, the client application is a derived context application in the server-driven UI computing methodology.

Derived context applications may subscribe to dynamic updates and insights published by the server and display the dynamic updates and insights to a user. A technical challenge arises when using large language models (LLMs) to publish context-based insights to the derived context application. The derived context application may use user-navigation patterns, or "breadcrumbs" paths to obtain user context and send the user context to the server application for continuing updates.

However, UI screens may include UI elements selected from diverse application domains. For example, a UI screen may show a dashboard of business metrics including inventory, expenses, and cash investments of a business, drawing data and UI elements from an inventory management domain, and an accounting management domain, respectively. In these situations, the payload of the UI elements, included in the user-navigation patterns, may overload network bandwidth. Further, computing resources on the client and server sides may be overloaded beyond capacity. Moreover, LLMs may not be trained to use and infer from user-navigation patterns for data analysis and processing. Resultingly, the generated insights may be inaccurate, and overly generalized in relation to a user.

### SUMMARY

Particular aspects are set out in the appended independent claims. Various optional embodiments are set out in the dependent claims.

One or more embodiments are directed to a method. The method includes obtaining multiple user interface (UI) elements by a UI generator. The method further includes adding a set of static descriptors to a first subset of the multiple UI elements. The method further includes populating the multiple UI elements with data values corresponding to data fields of the multiple UI elements to obtain multiple populated UI elements. The method further includes transmitting a UI document including the multiple populated UI elements to a client application to be rendered by a client application user interface of the client application. The method further includes generating a prompt to the LLM based on the set of static descriptors, and the data fields of the multiple UI elements. The method further includes processing the prompt by the LLM to generate an insight based on the prompt. The insight is transmitted to the client application to be rendered by the client application user interface.

One or more embodiments are directed to a system. The system includes at least one computer processor, at least one enterprise application, an LLM and a user interface (UI) generator executing on the at least one computer processor. The UI generator is configured to cause the at least one computer processor to obtain multiple UI elements. The UI generator is further configured to cause the at least one computer processor to add a set of static descriptors to a first subset of the multiple UI elements. The UI generator is further configured to cause the at least one computer processor to select a second subset of UI elements from the multiple UI elements. The LLM executing on the at least one computer processor is configured to process the second subset of UI elements to obtain a set of dynamic descriptors. The UI generator is further configured to cause the at least one computer processor to add the set of dynamic descriptors to the second subset of UI elements. The UI generator is further configured to cause the at least one computer processor to populate the multiple UI elements with data values corresponding to data fields of the multiple UI elements to obtain multiple populated UI elements. The UI generator is further configured to cause the at least one computer processor to transmit a UI document including the multiple populated UI elements to a client application. The UI generator is further configured to cause the at least one computer processor to generate a prompt to the LLM based on the set of static descriptors, the set of dynamic descriptors and the data fields of the plurality of UI elements. The LLM is further configured to process the prompt to generate an insight based on the prompt. The UI generator is further configured to cause the at least one computer processor to transmit the insight to the client application.

One or more embodiments are directed to a method. The method includes receiving, by a UI generator of a server computing system, a request for a UI document from a client application. The method further includes obtaining multiple user interface (UI) elements by the UI generator. The method further includes adding a set of static descriptors to a first subset of the multiple UI elements. The method further includes selecting a second subset of UI elements from the multiple UI elements. The method further includes processing the second subset of UI elements with a large language model (LLM) to obtain a set of dynamic descriptors. The method further includes adding the set of dynamic descriptors to the second subset of UI elements. The method further includes populating the plurality of UI elements with data values corresponding to data fields of the multiple UI elements to obtain multiple populated UI elements. The method further includes transmitting the UI document including the plurality of populated UI elements to the client application. The method further includes rendering, by a client application user interface of the client application, the UI document.

Other aspects of one or more embodiments will be apparent from the following description and the appended claims.

### BRIEF DESCRIPTION OF DRAWINGS

FIG. 1 shows a computing system, in accordance with one or more embodiments.
FIG. 2 shows a data flow diagram between various components of the computing system shown in FIG. 1, in accordance with one or more embodiments.
FIG. 3 shows a flowchart of a method for generating server-driven UI with element level context and LLM insight, in accordance with one or more embodiments.
FIG. 4 shows an example of obtaining dynamic descriptors from an LLM, in accordance with one or more embodiments.
FIG. 5 shows an example of UI object descriptors, context-based prompt and LLM response, in accordance with one or more embodiments.
FIG. 6 shows a mobile user interface of a client application executing on a mobile device, in accordance with one or more embodiments.
FIG. 7A and FIG. 7B show a computing system, in accordance with one or more embodiments.
Like elements in the various figures are denoted by like reference numerals for consistency.

### DETAILED DESCRIPTION

User interface (UI) widgets are the building blocks of a UI. UI widgets refer to UI controls (*e.g.,* buttons, checkboxes, *etc*.)*,* containers (*e.g.,* tables, text boxes, *etc.*)*,* and components (*e.g.,* images, charts, *etc.*)*.* The UI elements are descriptions of UI widgets and the data fields, corresponding to a particular application domain, that are represented by the UI widgets. For example, the UI elements include information pertaining to attributes of the widgets and data fields. The server generates the UI elements. The server additionally populates the UI elements with descriptors that pertain to the data fields of the UI elements. Descriptors include static descriptors and dynamic descriptors. Static descriptors may be generated based on predefined rules associated with the data fields of the UI element. Dynamic descriptors for a UI element may be obtained by programmatically prompting a large language model (LLM) to generate the dynamic descriptors based the LLM's domain-specific knowledge pertaining to data fields of the UI element.

The UI elements may further include dynamic data, which are values of the data field of the UI element. Dynamic data may be obtained from the domain-specific enterprise applications that manage and update domain data of the UI elements. The generated UI elements are formatted and serialized into a UI document, or payload. The server transmits the UI document to the derived context application which renders the UI. Additionally, the server generates one or more prompts, including the descriptors and dynamic data of the UI elements, for the LLM. The prompts are processed by the LLM to generate an insight based on the UI elements. The insight is published by the server to the derived context application. The insight is rendered to display to the user as the user navigates through the user interface of the derived context application.

Thus, one or more embodiments are directed to deriving and inferring contextual information by LLM using a combination of static and dynamic descriptors and dynamic data. The LLM further uses the contextual information to generate insights for the derived context application. More particularly, the contextual information may be obtained from the UI elements in the rendered UI. The contextual information may be obtained in the absence of an explicit prompt or a user-navigation pattern.

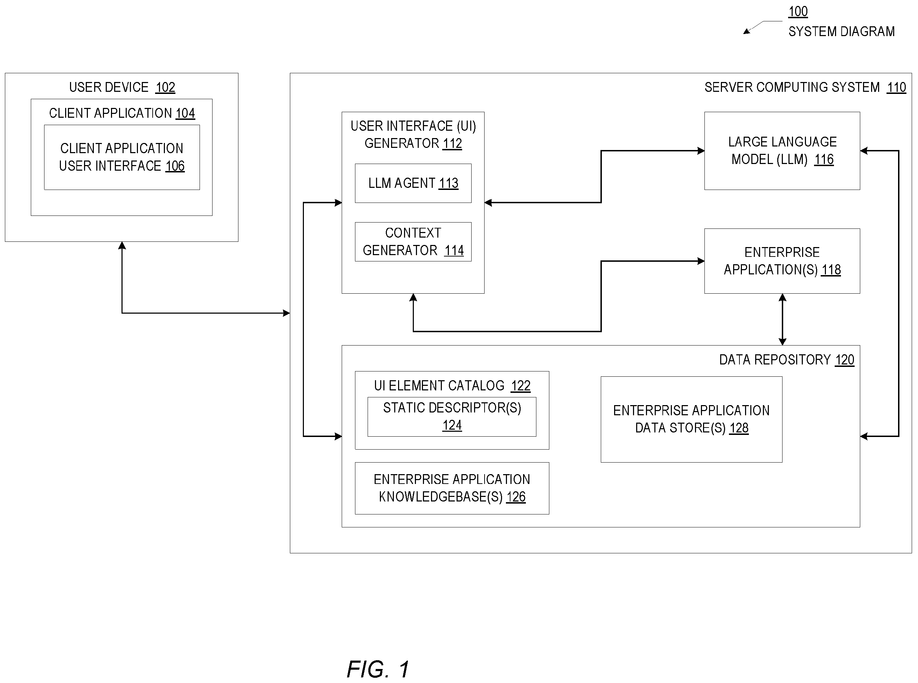

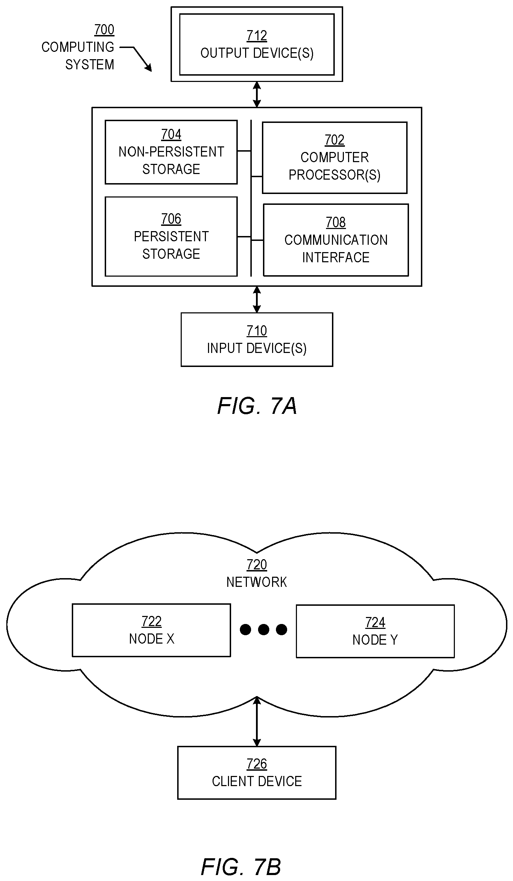

Attention is now turned to the figures. FIG. 1 shows a computing system, in accordance with one or more embodiments. The server computing system (110) is one or more computer processors, data repositories, communication devices, and supporting hardware and software. The server computing system (110) may be in a distributed computing environment. The server computing system (110) is configured to execute one or more applications, such as the user interface generator (UI) (112), a large language model (LLM) (116), and one or more enterprise application(s) (118). An example of a computer system and network that may form the server computing system (110) is described with respect to FIG. 7A and FIG. 7B. The server computing system (110) includes a computer processor. The computer processor is one or more hardware or virtual processors which may execute computer-readable program code that defines one or more applications, such as the user interface generator (112), a large language model (LLM) (116), and one or more enterprise application(s) (118). An example of the computer processor is described with respect to the computer processor(s) (702) of FIG. 7A.

The server computing system (110) includes a data repository (120). The data repository (100) is a type of storage unit or device (*e.g.,* a file system, database, data structure, or any other storage mechanism) for storing data. The data repository (120) may include multiple different, potentially heterogeneous, storage units and/or physical storage devices.

In continuing reference to FIG. 1, the data repository (120) includes enterprise application knowledge base(s) (126), enterprise application data store(s) (128), and a UI object catalog (122). Each of these components are described below.

The enterprise application knowledgebase(s) (126) shown in FIG. 1 is representative of one or more knowledge repositories that may include information pertaining to one or more enterprise application(s) (118). For example, the enterprise application knowledge base (118) may include a knowledge base related to federal and state income tax laws, regulations, tax calculation schemes, *etc.* Another example of an enterprise application knowledge base (118) may pertain to credit and debt information pertaining to individuals, and regulations and compliance policies thereof. In one or more embodiments, the LLM (116) may be specifically trained on the enterprise application knowledge base(s) (126). Further, the enterprise application knowledge base(s) (118) may have a many-to-many mapping relationship with the enterprise applications (118). For example, an enterprise tax planning application may use at least the enterprise application knowledge base related to federal and state income tax, and additionally, credit and debit information pertaining to individuals. Examples of enterprise application knowledge bases include knowledge management systems of an enterprise, document search engines such as ElasticSearch^{®}, *etc.*

The enterprise application data store(s) (128) shown in FIG. 1 may include field values pertaining to the enterprise application(s) (118). For example, if one of the enterprise applications (118) is an inventory management application, the enterprise application data store (128) corresponding to the inventory management application may include the inventory information about an organization. The inventory information may be stored in field-value pairs for each product listed in the enterprise application data store. For example, the fields in the inventory information may include item number, item name, item description, supplier name, supplier item number, *etc.* In a similar manner, if one of the enterprise applications is an expense management application, the enterprise application data store (128) corresponding to the expense management application may include expense information of a given organization. For example, the expense information may include expense item number, expense item category, expense amount, *etc.* Examples of data stores include databases, data lakes, vector data stores, spreadsheets, *etc.*

The data repository (120) shown in FIG. 1 may further include a UI element catalog (122). The UI element catalog may include multiple UI elements.

A UI element is a building block that defines a specific part of the user interface. More particularly, the UI element defines, or describes, an UI widget of a user interface, such as a button, text field, image, table, or a container including more UI widgets, for example, the screen, or particular page. Further, the UI element includes one or data fields of a domain-specific application that populates the UI widget. For example, a text field may be populated with an address of a customer. The data field value of a UI element may be hard-coded into the UI element definition. Alternatively, the data field value of a UI element may be obtained dynamically from a domain-specific application. In this case, the data fields of the UI element may be referred to as "dynamic data."

A UI element may be described in a structured format, including the widget type (e.g., button, text, image, container), properties, including color, size, style, font etc., interactions (events associated with the UI element, e.g., "onClick" or "onChange"). A UI element may include descriptors. A descriptor of a UI element refers to a natural language utterance that provides context and meaning to the UI element within the UI interface in which the UI element is rendered. For example, if a UI element describes a text box widget, populated by the age of an individual, then a descriptor for the UI element may include information about the age, format, and range of age (e.g., not greater than 120, not a negative number). Descriptors may include static descriptors and dynamic descriptors. Static descriptors may be generated based on predefined rules programmed as business logic in domain-specific enterprise applications that operate on the data of the UI element. The data of the UI element may be subject to the predefined rules. The predefined set of rules may include rules for availability of a data field, or UI widget, of a given UI element to a particular user. The predefined set of rules may also include limitations of range values, permissible data types, data format rules, *etc.* For example, if the UI element being defined is an age range checkbox, (*e.g.,* 50-55), then the static descriptor corresponding to the UI element may be generated by a (domain-specific) enterprise application. In the case of an insurance estimation application, for the age range check-box, the static descriptor may include information that restricts the payout years to thirty years. On the other hand, in a retirement planning application, the static descriptor may include information that restricts the risk profile of the age range to moderate risk investments. Thus, the content of the static descriptor may be generated by the rule-processing business logic of the domain-specific application to which a data field of the UI element pertains.

Dynamic descriptors may be generated by an LLM in response to a request including the UI element and related parameters. A dynamic descriptor may be generated based on the LLM's prior training or fine-tuning on the knowledge management systems or knowledge bases of the enterprise.

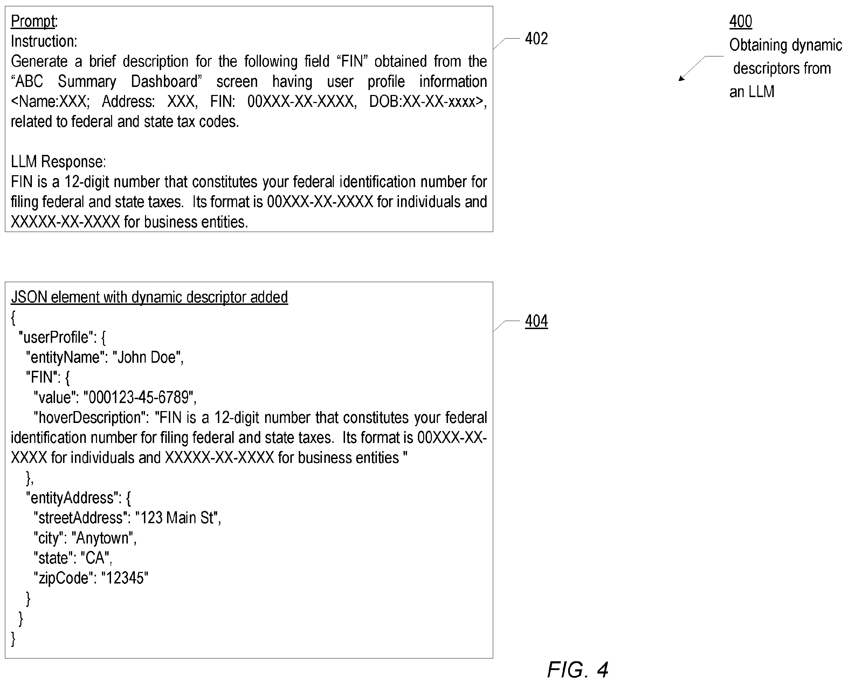

In one or more embodiments, the UI element catalog may be generated by the one or more enterprise application(s) (118) of the server computing system (110). Examples of UI element definitions in the UI element catalog may include Javascript Object Notation (JSON) object definitions, or Hyper-text Markup Language (HTML) object definitions. An example of a JSON UI element that may be obtained from the UI catalog is shown in FIG. 4.

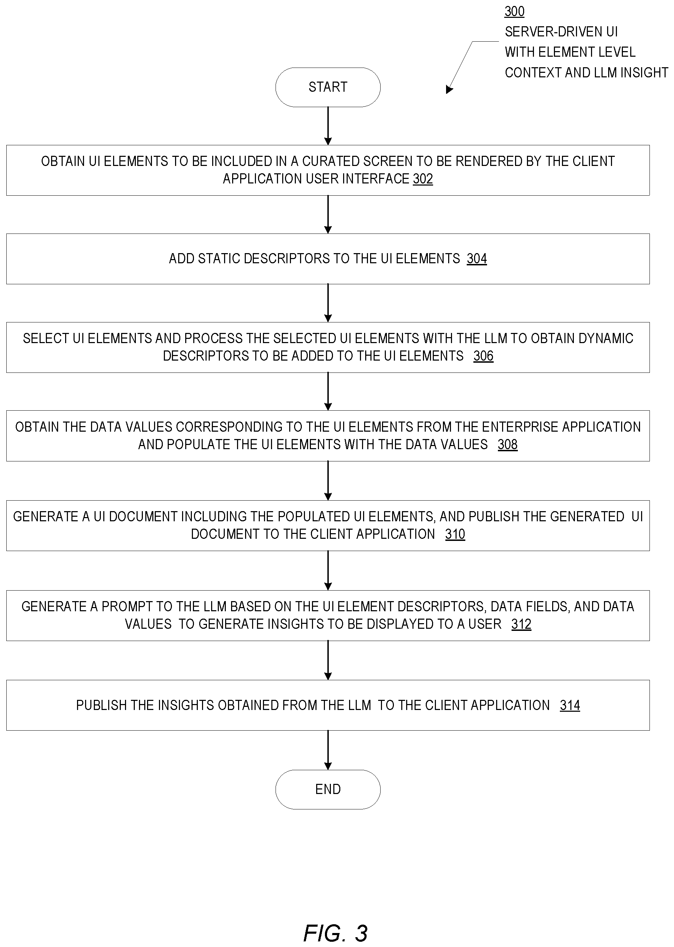

The server computing system (110) may include a large language model (LLM) (116). Large language models are natural language processing (NLP) machine-learning models, designed to understand and generate human language. Large language models may have billions of model parameters and may be trained on vast amounts of natural language corpora to perform a variety of language-related tasks. Examples of large language models include ChatGPT^{®}, Llama^{®}, Mistral 7^{®}, *etc.* In one or more embodiments, the LLM (116) may be prompted to generate dynamic descriptors for the server-driven UI being generated for the client application (104). Further, the LLM (116) may be prompted to generate insights for a client application (104) based on the UI elements that are rendered on the client application user interface (106) of the client application (104). The generation of insights for the client application is described in further detail in reference to FIG. 3.

The enterprise application(s) (118) shown in FIG. 1 are one or more programs and computer-readable code, executing on the one or more processors of the server computing system (110). The enterprise applications (118) may include various enterprise applications configured for various product lines of an enterprise, and hosted on the server computing system. For example, the enterprise applications (118) may include business intelligence applications, inventory management applications, expense, and business accounting management applications, *etc.* In one or more embodiments, the enterprise applications (118) may correspond to server applications of a client-server model, in which the client application(s) (106) on the user computing device (102) are the clients of the client-server model.

The user interface (UI) generator (112) is a set of computer programs and computer-readable code, executing on the one or more processors of the server computing system (110). The UI generator (112) is configured to generate user interface screens for the client applications (104) to be rendered on the client application user interface (106). In one or more embodiments, the UI generator (112) may be configured to generate user interface (UI) documents including one or more UI elements. As shown in FIG. 1, the UI generator (112) includes an LLM agent (113) and a context generator (114). However, different architectural arrangements may be possible. For example, the LLM agent (113) may be a part of the context generator (114).

The LLM agent (113) is a collection of programs and computer-readable code that uses an LLM as its core computational engine. The LLM agent may be programmed to create a structured plan of programmatically invoking the LLM with a series of prompts to achieve specific goals. Further, the LLM agent may have enhanced capabilities compared to chatbots or co-pilot applications to remember past interactions and use the past interactions to inform future actions.

The context generator (114) is a collection of programs and computer-readable code that may be configured to select UI elements, define, and populate the UI element attributes, and serialize the UI elements into a UI document format, to be decoded and rendered in the client application user interface (106). Further, the context generator (114) may add static descriptors, dynamic descriptors, and dynamic data to the UI elements. Thus, the UI generator (112) may orchestrate the context generator (114) and the LLM agent (113) to obtain a populated UI document of UI element definitions to be rendered by the client application user interface (106) on the user computing device (102). In one or more embodiments, the UI generator (112) may generate the UI via a template rendering technique, where Hyper-Text Markup Language (HTML) or JSON is generated that describes the UI. Alternatively, the UI generator (112) may construct the UI using UI elements, which are subsequently serialized into a JSON format. In another alternative method, the UI generator (112) may dynamically generate the UI elements based on user data or other parameters.

The system shown in FIG. 1 also may include one or more user device(s) (102). The user device(s) (102) may be considered remote or local. A remote user device is a device operated by a third-party (*e.g*., an end user of a chatbot) that does not control or operate the server computing system (110). Similarly, the organization that controls the other elements of the server computing system (110) may not control or operate the remote user device (102). Thus, a remote user device may not be considered part of the system of FIG. 1.

In contrast, a local user device is a device operated under the control of the organization that controls the other components of the system of FIG. 1. Thus, a local user device may be considered part of the system of FIG. 1.

In one or more embodiments, the user devices (102) are computing systems (*e.g*., the computing system (700) shown in FIG. 7A) that communicate with the server computing system (110). In one or more embodiments, the user devices (102) may be computing systems in the form of mobile devices operating in a local area network, broadband network, or wireless network, and communicably coupled to the server computing system (110). Examples of user devices may include laptop computers, desktop computers, tablets (iPad^{®}), or mobile phones. The user device (102) may be configured to execute one or more client application(s) (104). The client application (104) may include a client application user interface (106) which may be a mobile interface, *i.e.,* a graphical user interface configured for mobile phones, or a web interface, *i.e.,* a graphical user interface rendered within a web browser application executing on the user device (102). Further, the client application (104) may be communicatively coupled with the server computing system (110), in particular, the UI generator (112) of the server computing system (110).

The client application(s) (104) may include applications that are communicatively coupled to one or more enterprise applications (118) in a server/service-client relationship. For example, a client application (104) may be a business intelligence client application, with features configured for display and management of information related to a business, such as inventory, expenses, cash flow, *etc.* The business intelligence application may be a client of a client-server model. The corresponding server application may be a business intelligence server application, or business intelligence service, executing on the server computing system (110). In another example, a client application (104) may be a personal health tracking application, in a client-server relationship with a healthcare informatics application executing on the server computing system (110). The business intelligence server application and healthcare informatics application may be examples of the enterprise applications (118) executing on the server computing system (110). The client application user interface (106) may include computer-readable code that is configured for rendering a server-driven UI document. In one or more embodiments, the client application user interface (106) may be configured to process user interface documents in various formats, for example, HTML, XML, JSON, *etc.* The rendering process performed by the client application user interface (106) is described in further detail in reference to the method of FIG. 3.

While FIG. 1 shows a configuration of components, other configurations may be used without departing from the scope of one or more embodiments. For example, various components may be combined to create a single component. As another example, the functionality performed by a single component may be performed by two or more components.

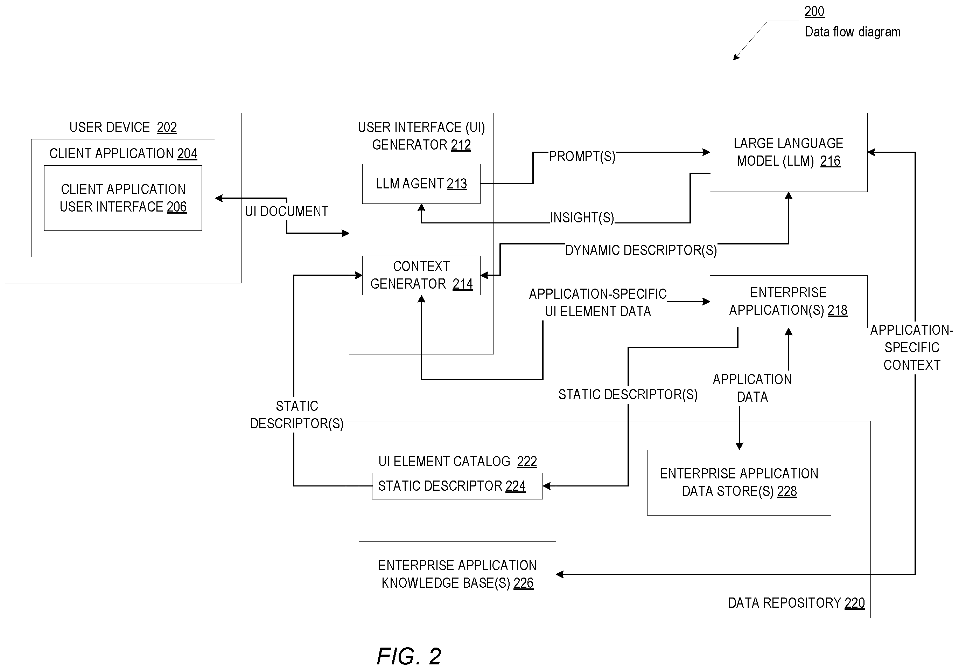

FIG. 2 shows a data flow diagram (200) of an example data flow between the components and data repository of the system shown in FIG. 1. In FIG. 2, Block 202 shows the user computing device, which includes the client application (204) and the client application user interface (206). Blocks 202, 204, and 206 correspond to Blocks 102, 104, and 106 of the system shown in FIG. 1. The client application (204) may receive UI documents from the UI generator (212), which corresponds to the UI generator (112) of FIG. 1. The UI documents include one or more UI elements and corresponding attributes, dynamic data, and descriptors. The UI document is rendered by the client application web interface (206).

The UI generator (212) includes an LLM agent (213), corresponding to the LLM agent (113) of FIG. 1. The LLM agent (213) may send prompts to the LLM (216). The LLM (216) corresponds to the LLM (116) of FIG. 1. The LLM (216) may process the prompts and return insights that are context-driven by the UI document being rendered by the client application web interface (206).

The context generator (214), corresponding to the context generator (114) of FIG. 1, may send a request to the LLM to provide a dynamic descriptor for a UI element being prepared for the UI document The LLM may refer to the enterprise application knowledgebase(s) (226) to obtain domain-application specific context about the UI element and process the information to generate a dynamic descriptor for the UI element. For example, if a UI element is defined for a data field known as "TID," then, depending on the domain, the name TID may indicate that the data field is a transaction ID of an expense management application, or a tax identification number of a tax preparation application. In this situation, the context generator (214) may obtain the domain information of the UI element and request the LLM to generate a dynamic descriptor of the data field. If the domain of the data field is "tax application," for example, then the LLM may refer to the corpora related to tax code in the enterprise application knowledgebase(s) (226) and generate a context-specific dynamic descriptor of the data field. The context generator (214), may, in turn, add the dynamic descriptor to the UI element.

The context generator (214) may obtain static descriptors (224) for the UI elements from the UI element catalog (222) in the data repository (220). The static descriptors are natural language utterances corresponding to the UI elements. Static descriptors may be generated by processing pre-defined sets of rules associated with data fields of the UI element in the enterprise application (218). As shown in FIG. 2, the static descriptors may be generated by the enterprise applications (218) and stored with the corresponding UI elements in the UI element catalog.

The context generator (214) may obtain application-specific UI element data from the enterprise applications (218) to populate the data fields of the UI elements. The enterprise applications (218) may in turn, retrieve the application data from corresponding enterprise application data stores (228). For example, if a UI element defines a table widget populated with the five lowest stocked items of a product type in an inventory, the context generator (214) may send a request to an inventory management application to retrieve the five lowest stocked items of the product type. The inventory management application may in turn retrieve the items by obtaining the item names and stock quantities from an inventory database of the enterprise application data stores (228). Thus, the context generator (214) may populate the UI element with application-specific UI element data, or "dynamic data".

FIG. 3 shows a flowchart, 300, with a method for server-driven UI, element level context, and LLM insight, in accordance with one or more embodiments. The method of FIG. 3 may be implemented using the system of FIG. 1 and one or more of the steps may be performed on or received at one or more computer processors.

While the various steps in flowchart 300 are presented and described sequentially, at least some of the steps may be executed in different orders, may be combined, or omitted, and at least some of the steps may be executed in parallel. Furthermore, the steps may be performed actively or passively

The flowchart 300 starts at Block 302. In Block 302, multiple UI elements to be included in a curated screen for the client application user interface are obtained. In one or more embodiments, multiple UI elements may be obtained by the UI generator of FIG. 1. The UI elements may be obtained from the UI element catalog in the data repository shown in FIG. 1. In other embodiments, the UI generator may invoke one or more enterprise applications, shown in the system of FIG. 1 to obtain the UI elements. Notably, the UI elements may be obtained from enterprise applications executing on the server that are from different domains. For example, a curated screen may be generated for a dashboard showing diverse business metrics of a user managing a business. The curated screen may include a view of inventory items, orders, expenses, and cash flow. To generate the curated screen, the UI generator may obtain UI elements for the view of inventory items by invoking an inventory management application executing on the server computing system. Further, the UI generator may invoke an accounting management application executing on the server computing system to obtain UI elements showing the top expense items. Continuing with the same example, alternatively, the UI generator may obtain UI elements for the curated screen of the dashboard from the UI element catalog. The UI element catalog may be previously populated with UI elements by the one or more enterprise applications.

In Block 304, static descriptors are added to the UI elements. In one or more embodiments, a set of static descriptors may be added to a first subset of UI elements of the multiple UI elements. In one or more embodiments, the UI generator may retrieve static descriptors corresponding to the UI elements from the UI element catalog and add the respective static descriptors as descriptor attributes of the corresponding UI elements of the first subset of UI elements. In one or more embodiments, the static descriptors corresponding to the UI elements may be previously populated in the UI element catalog along with the UI elements, by the one or more enterprise applications executing on the server computing system. For example, a UI element may define a text box widget that displays a data field labeled FEIN. The static descriptor corresponding to the UI element may include the description: "FEIN stands for Federal Employer Identification Number. It is a unique nine-digit identification number assigned by the Internal Revenue Service to employers, sole proprietors, corporations, partnerships, and other entities for tax filing and reporting purposes."

More particularly, the static descriptor corresponding to the UI element may be generated based on the data type of the data field. The data type of the data field may be associated with a set of predefined rules, implemented as business logic in the enterprise application with which the data field is associated. In the example, the data field FEIN may be associated with a tax filing and reporting application executing on the server computing system. The tax filing and reporting application may include a programmatic implementation of the predefined rules associated with the data field FEIN, for example field length, field type, and field criticality (*e.g*., "mandatory field; must be filled"). Thus, the predefined rules inform the content of the static descriptor for the UI element for the data field FEIN. In another example, for a data field that is an item expiry date, in an inventory management application, the predefined rules may cause an alert to be raised when a stocked item's expiry date is imminent. Resultingly, the static descriptor may include the information "Item expiry date is critical to track for waste minimization, understocking or overstocking." Thus, the UI element that defines the UI widget populated by the item expiry date data field may include attributes that present the UI widget in an exaggerated manner, or in enhanced focus, (*e.g.,* bold font, red color) on the display of the user computing system.

In one or more embodiments, the UI generator may directly interact with the enterprise applications to obtain static descriptors. The UI generator may obtain static descriptors for a UI element by selecting the data fields of the UI element and invoking the enterprise applications to process the data fields. The enterprise applications that are invoked may respectively be associated with corresponding data fields. From the examples above, the UI generator may invoke the inventory management application to obtain a static descriptor for the item expiry date data field. In a similar manner, the UI generator may invoke the tax filing and reporting application to obtain a static descriptor for the FEIN data field. In each of the examples, the respective enterprise application may process the set of predefined rules associated with, or corresponding to, the particular data field provided by the UI generator to generate the static descriptor corresponding to the particular data field.

Accordingly, the set of static descriptors may be added to the first subset of UI elements by obtaining a first data field of a first UI element of the first subset of UI elements. A first enterprise application may process a first set of predefined rules corresponding to the first data field to obtain a first static descriptor of the set of static descriptors. The first static descriptor may be added to the first UI element in a first descriptor field of the first UI element. Other static descriptors may be added to other UI elements in a similar manner.

In Block 306, UI elements are selected, and the selected UI elements are processed with the LLM to obtain dynamic descriptors to be added to the selected UI elements.

In certain situations, static descriptors for the UI elements may not be available, or may include generalized, or ambiguous information. A reason may be that the data field(s) of the UI element may be associated with a predefined set of rules confined to focus on data type and format, range values, *etc.* As a result, the predefined set of rules may generate obvious, or superficial ambiguous static descriptors. The static descriptors may not provide pertinent, business-critical information to an LLM processing the UI element to generate insights.

Accordingly, in one or more embodiments, a second subset of UI elements may be selected from the multiple UI elements. Dynamic descriptors providing pertinent information with respect to the significance and business criticality of the UI elements may be obtained for the second subset of UI elements. The second subset of UI elements may be processed with a large language model (LLM) to obtain a set of dynamic descriptors. Furthermore, the set of dynamic descriptors may be added to the second subset of UI elements.

More particularly, in one or more embodiments, a first UI element may be selected from the second subset of UI elements. The first UI element may be processed by the LLM to obtain a first dynamic descriptor corresponding to the first UI element. The first dynamic descriptor may be added to the first descriptor field of the first UI element. Processing the first UI element by the LLM may entail generating a dynamic descriptor prompt for the LLM. The dynamic descriptor prompt may include an instruction to generate a dynamic descriptor based on the attributes of the UI element. Further, the prompt may include the first UI element as an input. The dynamic descriptor prompt may be processed by the LLM to obtain the first dynamic descriptor corresponding to the first UI element. In one or more embodiments, the context generator may generate the dynamic descriptor prompt, and add the UI element as a prompt input. The LLM agent may programmatically send the prompt to the LLM to obtain the dynamic descriptor, and the dynamic descriptor may be added to the UI element by the context generator. The UI generator may be configured to orchestrate the context generator and the LLM agent in the process of obtaining dynamic descriptors.

In Block 308, the data corresponding to the UI elements from the enterprise application is obtained, and the UI elements are populated with the data values. In one or more embodiments, the multiple UI elements may be populated with data values corresponding to data fields of the multiple UI elements to obtain multiple populated UI elements. More particularly, a first data field of a first UI element of the multiple UI elements may be sent to an enterprise application executing on the server computing system. The enterprise application may be the domain-specific application associated with managing and processing the data model that includes the first data field. The enterprise application may further process the first data field to obtain a first data value. In one or more embodiments, the enterprise application may retrieve the most recently updated value corresponding to the first data field. The enterprise application may add the first data value to the first data field. Other data fields of the UI element and other UI elements of the multiple UI elements may be populated with data values in a similar manner.

In Block 310, a UI document including the populated UI elements is generated, and the generated UI document is published to a client application. In one or more embodiments, the UI document including the multiple populated UI elements is transmitted to a client application to display on a client application user interface. In one or more embodiments, the UI generator may generate the UI document. The UI document may include the multiple populated UI elements. The multiple populated UI elements each may include at least one of a static descriptor, a dynamic descriptor, and a data field, in accordance with the steps of Blocks 304-308. The UI document may further be transmitted to the client application.

As a general overview, the generated UI document, for example, a JSON document, or an HTML, or XML document, follows a hierarchical structure to define the layout and elements of the user interface. Thus, the UI element associated with the entire screen may be included, and within the UI element for the screen, other UI elements for containers (*e.g.*, lists, tables, dialog boxes) may be included. Further, each container UI element may include individual UI elements, such as text boxes, checkboxes, buttons, *etc.* The UI element representing the screen may be considered as the "root" UI element and container UI elements may be nested to various degrees of complexity.

Rendering a server-driven UI document entails a process in which a server sends data and layout instructions to a client, which then uses this information to construct and display the UI. Examples of server-driven UI frameworks may include DivKit^{®}, Beagle^{®}, React^{®}, Native, *etc.*

Accordingly, in one or more embodiments, the client application may receive the UI document from the UI generator of the server computing system. The client application user interface of the client application may then parse the UI document to obtain the structure and elements of the UI. Further, the client application user interface may create client-side UI elements corresponding to the UI elements in the UI document. In one or more embodiments, the client application user interface may iterate through the UI document, creating client-side UI elements corresponding to each UI element in the UI document. The client application user interface may particularly maintain the hierarchical structure of the UI document when creating the client-side UI elements and relationships. The client application user interface may add logic to the client-side UI elements to handle navigation or API calls included in the UI elements of the UI document. The client application user interface of the client application may then render the UI document by rendering the client-side UI elements to display on the user computing system. Notably, the static and dynamic descriptors may not be rendered on the display, however, the static and dynamic descriptors may be maintained as a hidden context associated with the client-side UI element. In one or more embodiments, the static and dynamic descriptors may be displayed based on an action of the user, for example, hovering over a data field.

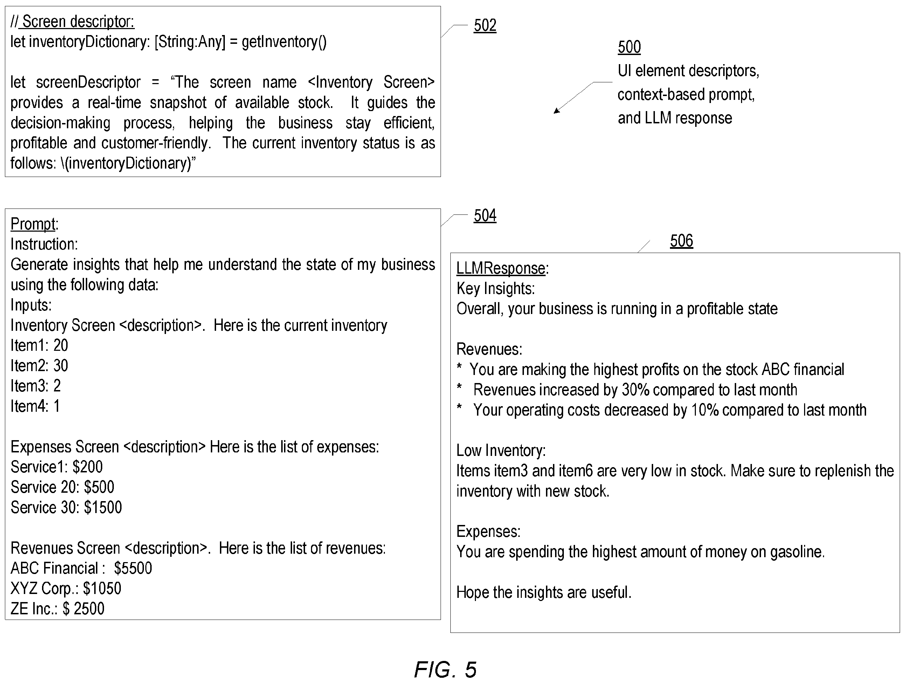

In Block 312, a prompt to the LLM is generated, based on the UI element descriptors and data, to generate insights based on the screen content displayed to a user. In one or more embodiments, the UI generator may generate a prompt to the LLM based on the set of static descriptors, the set of dynamic descriptors, and the field data corresponding to multiple UI elements. As a general overview, the prompt may include an instruction and an input. The instruction may be one or more natural language utterances directing the LLM to generate an insight based on the input provided. An example of a prompt instruction to generate insights is shown in FIG. 5. To generate the prompt, the UI generator may select UI elements from the UI document that are associated with a particular screen or multiple screens. The UI generator may obtain the static and dynamic descriptors corresponding to the selected UI elements. The UI generator may further obtain the data fields and data values of the selected UI elements. The UI generator may further set the input of the prompt as the static descriptors, dynamic descriptors, data fields, and data values of the selected UI elements.

More particularly, in one or more embodiments, the UI generator may generate the prompt to the LLM. The prompt may include an instruction to generate an insight based on at least one input. The at least one input may correspond to at least one UI element of the multiple UI elements. The at least one input may be obtained by selecting at least one of a static descriptor from the at least one UI element, a dynamic descriptor from the at least one UI element, or a data field and corresponding data value from the at least one UI element.

In Block 314, the insights obtained from the LLM are published to the client application. In one or more embodiments, the prompt from Block 312 may be processed by the LLM to generate an insight based on the prompt. The insight may be transmitted by the UI generator to the client application to be displayed by the client application user interface. In one or more embodiments, the client application and the UI generator may mutually interact in a publisher-subscriber model. As a general overview, a publisher-subscriber model is a messaging protocol, or pattern, in which senders, or publishers, send messages to a particular topic of interest. A message broker receives messages intended for the particular topic. The message broker then transmits the messages to subscribers of the particular topic. In the context of the UI generator and the client application, the UI generator may be considered as a publisher, and the client application may be considered as a subscriber. The message broker (not shown in FIG. 1) may be included as a component of the server computing system. An example of a message broker may be Message Queuing Telemetry Transport (MQTT), or Apache Kafka, or AWS^{®}, SNS.

Accordingly, in one or more embodiments, transmitting the insight to the client application to be displayed by the client application user interface may further include the UI generator publishing the insight to at least one publisher-subscriber topic. Notably, the client application may be subscribed to the at least one publisher-subscriber topic. The client application may receive an update (from the message broker) from the at least one publisher-subscriber topic. The update may include the insight published by the UI generator. Further, the client application user interface of the client application may render the insight on the display of the user computing system. Thus, as a user navigates one or more screens of the client application user interface, the asynchronous update of the publisher-subscriber topic may cause the client application user interface to display the insight dynamically on the current screen being viewed by the user. Moreover, the insight may be pertinent to the client application as a whole and not limited to the current screen. In other words, insights from the LLM are not confined to a predefined screen, but may be generated, transmitted, and displayed dynamically.

In the flowchart 300, Blocks 310, 312, and 314 in particular, may be performed sequentially, in parallel, synchronously, or asynchronously.

Turning now to FIG. 4, an example of obtaining dynamic descriptors from an LLM is shown, in accordance with one or more embodiments. The following example is for explanatory purposes only and not intended to limit the scope of one or more embodiments.

Block 402 shows an example of a prompt that may be programmatically provided to the LLM. The context generator, when generating a UI element of user profile information, with individual fields for name, address, financial identification number (FIN), date-of-birth, *etc.,* may request an LLM to provide a brief description of the FIN field. Information included may be the screen content, the user profile fields and values, and context domain information ("federal and state tax codes").

Block 404 shows the JSON element generated by the context generator after receiving the brief description from the LLM. The dynamic descriptor is added in the "hoverDescription" attribute. A generated, fully populated UI document may include several similar UI elements, in a hierarchical organization.

FIG. 5 shows an example of UI element descriptors, context-based prompts, and LLM response, including insights generated from a particular screen that a user may be viewing and navigating. Block 502 shows the (partial) definition of a screen UI element, *i.e*., "The screen name <Inventory Screen> provides a real-time snapshot of available stock. It guides the decision-making process, helping the business stay efficient, profitable, and customer-friendly."

In Block 504, a prompt that may be generated for the LLM to process and respond with an insight is shown. In Block 504, the instruction of the prompt is "Generate insights that help me understand the state of my business using the following data." The input of the prompt includes the inventory screen shown in Block 502. In particular, the descriptor of the inventory screen is included in the input. Similarly, screens for expenses and revenues are included. Notably, the inputs include descriptors, data fields, and data values, in accordance with Blocks 308-314 of the method shown in FIG. 3.

Block 506 shows an example of a response generated by the LLM to the prompt shown in Block 504. Each aspect of the business is shown with an insight particular to the business. The insight is focused and pertinent. For example, in the "Revenues" section of Block 504, the particular stock showing the highest gain is reported, along with the overall revenue increase. Notably, the insight is not a mere reproduction of the input provided as part of the prompt In Block 504. Furthermore, the items in inventory that need to be replenished are additionally reported. Thus, the LLM generates actionable and pertinent insights based on the screen information, UI element information and data values provided.

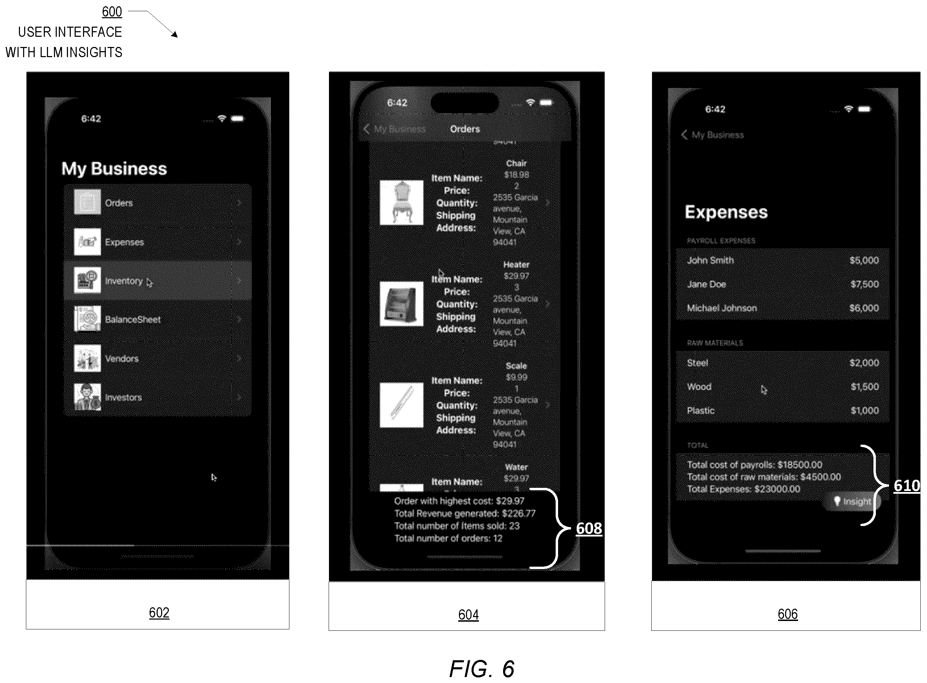

FIG. 6 shows an example of a client application user interface. As shown in FIG. 6, the client application is a mobile application, and the user interface is a mobile interface. Block 602 shows a dashboard of a business, operated, and managed by a particular user of the client application. The client application may be a business administration and management application, offering an overview of the current state of various aspects of the business. In Block 602, different aspects of the business, for example, "Orders", "Expenses", "Inventory, *etc.* are shown. The user may click or tap on the icons representing a particular aspect and obtain a more detailed view of the particular aspect.

In Block 604, a sample screen, or page of the "Orders" of the business is shown. Portion (608) of the screen shows an insight of the "Orders" page. The insight may be generated by the LLM. Alternatively, the insight may be generated by the business logic of an inventory management application executing on the server computing system, and added to the screen UI element of the "Orders" page.

In Block 606, the screen shows another aspect of the business operated by the user, namely, "Expenses." It may be understood that between Block 604 and Block 606, the user may have returned to the main screen of Block 602 from Block 604, and tapped "Expenses" to navigate to the screen shown in Block 606. However, when the screen of Block 606 is rendered, the portion (610) of the screen shows a new button, with a lightbulb icon marked "Insight." This button, when tapped may open a window with an insight from the LLM similar to that shown in Block 506 of the example of FIG. 5. Notably, while the process of navigation between "Orders" and "Expenses" does not entail an explicit way for the user to request an insight via interaction with any of the graphical widgets, the insight button is nevertheless rendered on the "Expenses" screen. A reason is when the client application receives an update on a subscribed topic, and renders the update on the screen. Notably, the "Insight" button may be generated by the client application, in addition to generating client-side UI elements corresponding to UI elements of the UI document. In other words, the "Insight" button may be "local" to the instance of the client application executing on the mobile device of the user. A copy of the same client application executing on a different mobile for a different user may not show the particular "Insight" button on the same screen.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 7A, the computing system (700) may include one or more computer processor(s) (702), non-persistent storage device(s) (704), persistent storage device(s) (706), a communication interface (708) (*e.g.,* Bluetooth interface, infrared interface, network interface, optical interface, *etc*.)*,* and numerous other elements and functionalities that implement the features and elements of the disclosure. The computer processor(s) (702) may be an integrated circuit for processing instructions. The computer processor(s) (702) may be one or more cores, or micro-cores, of a processor. The computer processor(s) (702) includes one or more processors. The computer processor(s) (702) may include a central processing unit (CPU), a graphics processing unit (GPU), a tensor processing unit (TPU), combinations thereof, *etc.*

The input device(s) (710) may include a touchscreen, keyboard, mouse, microphone, touchpad, electronic pen, or any other type of input device. The input device(s) (710) may receive inputs from a user that are responsive to data and messages presented by the output device(s) (712). The inputs may include text input, audio input, video input, *etc.,* which may be processed and transmitted by the computing system (700) in accordance with one or more embodiments. The communication interface (708) may include an integrated circuit for connecting the computing system (700) to a network (not shown) (*e.g*., a local area network (LAN), a wide area network (WAN) such as the Internet, mobile network, or any other type of network) or to another device, such as another computing device, and combinations thereof.

Further, the output device(s) (712) may include a display device, a printer, external storage, or any other output device. One or more of the output devices(s) (712) may be the same or different from the input device(s) (710). The input device(s) (710) and output device(s) (712) may be locally or remotely connected to the computer processor(s) (702). Many different types of computing systems exist, and the aforementioned input device(s) (710) and output device(s) (712) may take other forms. The output device(s) (712) may display data and messages that are transmitted and received by the computing system (700). The data and messages may include text, audio, video, *etc.,* and include the data and messages described above in the other figures of the disclosure.

Software instructions in the form of computer-readable program code to perform embodiments may be provided for causing a computer to become programmed to perform some or all of the techniques disclosed herein. Such software instructions may be stored, in whole or in part, temporarily or permanently, on a computer-readable storage medium (which may be referred to as a non-transitory computer-readable medium) such as a solid state drive (SSD), compact disk (CD), digital video disk (DVD), storage device, a diskette, a tape, flash memory, physical memory, or any other computer-readable storage medium. Software instructions may also be provided or conveyed by way of a computer-readable transmission medium. A computer-readable transmission medium may include carrier waves, transmission signals or the like. A computer-readable transmission medium may convey instructions between components of a single computer system and/or between plural separate computer systems. Thus the term computer-readable medium includes both computer readable storage media and computer-readable transmission media. Specifically, the software instructions may correspond to computer-readable program code that, when executed by the computer processor(s) (702), is configured to perform one or more embodiments, which may include transmitting, receiving, presenting, and displaying data and messages described in the other figures of the disclosure.

The computing system (700) in FIG. 7A may be connected to, or be a part of, a network. For example, as shown in FIG. 7B, the network (720) may include multiple nodes (*e.g.,* node X (722) and node Y (724), as well as extant intervening nodes between node X (722) and node Y (724)). Each node may correspond to a computing system, such as the computing system shown in FIG. 7A, or a group of nodes combined may correspond to the computing system shown in FIG. 7A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (700) may be located at a remote location and connected to the other elements over a network.

The nodes (*e.g.,* node X (722) and node Y (724)) in the network (720) may be configured to provide services for a client device (726). The services may include receiving requests and transmitting responses to the client device (726). For example, the nodes may be part of a cloud computing system. The client device (726) may be a computing system, such as the computing system shown in FIG. 7A. Further, the client device (726) may include or perform all or a portion of one or more embodiments.

The computing system of FIG. 7A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g*., data presented as actual data values through text, or rendered by the computing device into a visual representation of the data, such as through visualizing a data model.

Therefore, from one perspective, there has been described a method that includes obtaining multiple user interface (UI) elements by a UI generator. A set of descriptors is added to the UI elements. The UI elements are further populated with data values. A UI document including the populated UI elements with descriptors is transmitted to a client application and rendered on a user interface. A prompt is generated based on the descriptors, and the data of the UI elements. The prompt is processed by the LLM to generate an insight based on the prompt. The insight is transmitted to the client application to be rendered on the user interface.

Further examples of feature combinations taught by the present disclosure are set out in the following numbered clauses.

Clause 1. A method comprising: obtaining a plurality of user interface (UI) elements by a UI generator; adding a set of static descriptors to a first subset of the plurality of UI elements; populating the plurality of UI elements with data values corresponding to data fields of the plurality of UI elements to obtain a plurality of populated UI elements; transmitting a UI document including the plurality of populated UI elements to a client application to be rendered by a client application user interface of the client application; generating a prompt to a large language model (LLM) based on the set of static descriptors, and the data fields of the plurality of UI elements; processing the prompt by the LLM to generate an insight based on the prompt; and transmitting the insight to the client application to be rendered by the client application user interface.

Clause 2. The method of clause 1, further comprising: adding the set of static descriptors by: obtaining a first data field of a first UI element of the first subset of UI elements, processing, by a first enterprise application, a first set of predefined rules corresponding to the first data field to obtain a first static descriptor of the set of static descriptors, and adding the first static descriptor to the first UI element of the first subset of UI elements in a first descriptor field of the first UI element of the first subset of UI elements.

Clause 3. The method of clause 1 or 2, further comprising: selecting a second subset of UI elements from the plurality of UI elements; processing the second subset of UI elements with the LLM to obtain a set of dynamic descriptors; and adding the set of dynamic descriptors to the second subset of UI elements.

Clause 4. The method of clause 3, further comprising: adding the set of dynamic descriptors by: selecting a first UI element from the second subset of UI elements, processing the first UI element by the LLM by: generating a dynamic descriptor prompt for the LLM, wherein the dynamic descriptor prompt includes: an instruction to generate a dynamic descriptor based on the first UI element, and an input including the first UI element, and processing, by the LLM, the dynamic descriptor prompt, to obtain a first dynamic descriptor corresponding to the first UI element, and adding the first dynamic descriptor to a first descriptor field of the first UI element of the second subset of UI elements.

Clause 5. The method of any preceding clause, further comprising: populating the plurality of UI elements with data values by: sending a first data field of a first UI element of the plurality of UI elements to an enterprise application, processing, by the enterprise application, the first data field to obtain a first data value, and adding, by the enterprise application, the first data value to the first data field.

Clause 6. The method of any preceding clause, further comprising transmitting the UI document by: generating the UI document, wherein the UI document includes the plurality of populated UI elements, and wherein the plurality of populated UI elements each includes at least one of a static descriptor, a dynamic descriptor, and a data field, and transmitting the UI document to the client application.

Clause 7. The method of any preceding clause, further comprising: generating the prompt to the LLM, wherein the prompt includes an instruction to generate the insight based on at least one input, wherein the at least one input corresponds to at least one UI element of the plurality of UI elements, by selecting at least one of: a first static descriptor from the at least one UI element, a first dynamic descriptor from the at least one UI element, and a first data field and corresponding first data value from the at least one UI element, to obtain the at least one input.

Clause 8. The method of any preceding clause, wherein transmitting the insight to the client application to be rendered by the client application user interface further comprises: publishing the insight to at least one publisher-subscriber topic, wherein the client application is subscribed to the at least one publisher-subscriber topic; and receiving, by the client application, an update from the at least one publisher-subscriber topic, wherein the update includes the insight.

Clause 9. A system comprising: at least one computer processor; at least one enterprise application; a large language model (LLM); and a user interface (UI) generator, executing on the at least one computer processor and configured to cause the at least one computer processor to; obtain a plurality of UI elements, add a set of static descriptors to a first subset of the plurality of UI elements, select a second subset of UI elements from the plurality of UI elements, process, by the LLM executing on the at least one computer processor, the second subset of UI elements to obtain a set of dynamic descriptors, add the set of dynamic descriptors to the second subset of UI elements, populate the plurality of UI elements with data values corresponding to data fields of the plurality of UI elements to obtain a plurality of populated UI elements, transmit a UI document including the plurality of populated UI elements to a client application, generate a prompt to the LLM based on the set of static descriptors, the set of dynamic descriptors and the data fields of the plurality of UI elements, process, by the LLM, the prompt to generate an insight based on the prompt, and transmit the insight to the client application.

Clause 10. The system of clause 9, wherein the UI generator is further configured to cause the at least one computer processor to add the set of static descriptors by: obtaining a first data field of a first UI element of the first subset of UI elements; causing the at least one enterprise application executing on the at least one computer processor to process a first set of predefined rules corresponding to the first data field to obtain a first static descriptor of the set of static descriptors; and adding the first static descriptor to the first UI element of the first subset of UI elements in a first descriptor field of the first UI element of the first subset of UI elements.

Clause 11. The system of clause 9 or 10, wherein the UI generator is further configured to cause the at least one computer processor to add the set of dynamic descriptors by: selecting a first UI element from the second subset of UI elements; causing the LLM to process the first UI element to obtain a first dynamic descriptor corresponding to the first UI element; and adding the first dynamic descriptor to a first descriptor field of the first UI element.

Clause 12. The system of clause 11, wherein the UI generator is further configured to cause the at least one computer processor to process the first UI element with the LLM by: generating a dynamic descriptor prompt for the LLM, wherein the dynamic descriptor prompt includes: an instruction to generate a dynamic descriptor based on the first UI element, and an input including the first UI element; and causing the LLM to process the dynamic descriptor prompt, to obtain the first dynamic descriptor corresponding to the first UI element.

Clause 13. The system of any of clauses 9 to 12, wherein the UI generator is further configured to cause the at least one computer processor to populate the plurality of UI elements with the data values by: sending a first data field of a first UI element of the plurality of UI elements to the at least one enterprise application, processing, by the enterprise application, the first data field to obtain a first data value, and adding, by the enterprise application, the first data value to the first data field.

Clause 14. The system of any of clauses 9 to 13, wherein the UI generator is further configured to cause the at least one computer processor to transmit the UI document by: generating the UI document, wherein the UI document includes the plurality of populated UI elements, and wherein the plurality of populated UI elements each includes at least one of a static descriptor, a dynamic descriptor, and a data field, and transmitting the UI document to the client application.

Clause 15. The system of any of clauses 9 to 14, wherein the UI generator is further configured to: generate the prompt to the LLM, wherein the prompt includes an instruction to generate the insight based on at least one input, wherein the at least one input corresponds to at least one UI element of the plurality of UI elements, by selecting at least one of: a first static descriptor from the at least one UI element, a first dynamic descriptor from the at least one UI element, and a first data field and corresponding first data value from the at least one UI element, to obtain the at least one input.

Clause 16. The system of any of clauses 9 to 15, wherein the UI generator is further configured to transmit the insight to the client application by: publishing the insight to at least one publisher-subscriber topic, wherein the client application is subscribed to the at least one publisher-subscriber topic.

Clause 17. The system of clause 16, wherein the client application is configured to receive an update from the at least one publisher-subscriber topic, wherein the update includes the insight.

Clause 18. A method comprising: receiving, by a UI generator of a server computing system, a request for a UI document from a client application; obtaining a plurality of user interface (UI) elements by the UI generator; adding a set of static descriptors to a first subset of the plurality of UI elements; selecting a second subset of UI elements from the plurality of UI elements; processing the second subset of UI elements with a large language model (LLM) to obtain a set of dynamic descriptors; adding the set of dynamic descriptors to the second subset of UI elements; populating the plurality of UI elements with data values corresponding to data fields of the plurality of UI elements to obtain a plurality of populated UI elements; transmitting the UI document including the plurality of populated UI elements to the client application; and rendering, by a client application user interface of the client application, the UI document.

Clause 19. The method of clause 18, further comprising: generating a prompt to the LLM based on the set of static descriptors, the set of dynamic descriptors and the data fields of the plurality of UI elements; processing the prompt by the LLM to generate an insight based on the prompt; and transmitting the insight to the client application.

Clause 20. The method of clause 19, further comprising: transmitting the insight to the client application by: publishing the insight to at least one publisher-subscriber topic, wherein the client application is subscribed to the at least one publisher-subscriber topic, and receiving, by the client application, an update from the at least one publisher-subscriber topic, wherein the update includes the insight; and rendering, by the client application user interface of the client application, the insight.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc.*) may be used as an adjective for an element (*i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
obtaining a plurality of user interface (UI) elements by a UI generator;
adding a set of static descriptors to a first subset of the plurality of UI elements;
populating the plurality of UI elements with data values corresponding to data fields of the plurality of UI elements to obtain a plurality of populated UI elements;
transmitting a UI document including the plurality of populated UI elements to a client application to be rendered by a client application user interface of the client application;
generating a prompt to a large language model (LLM) based on the set of static descriptors, and the data fields of the plurality of UI elements;
processing the prompt by the LLM to generate an insight based on the prompt; and
transmitting the insight to the client application to be rendered by the client application user interface.

2. The method of claim 1, further comprising:
adding the set of static descriptors by:
obtaining a first data field of a first UI element of the first subset of UI elements,
processing, by a first enterprise application, a first set of predefined rules corresponding to the first data field to obtain a first static descriptor of the set of static descriptors, and
adding the first static descriptor to the first UI element of the first subset of UI elements in a first descriptor field of the first UI element of the first subset of UI elements.

3. The method of claim 1 or 2, further comprising:
selecting a second subset of UI elements from the plurality of UI elements;
processing the second subset of UI elements with the LLM to obtain a set of dynamic descriptors; and
adding the set of dynamic descriptors to the second subset of UI elements.

4. The method of claim 3, further comprising:
adding the set of dynamic descriptors by:
selecting a first UI element from the second subset of UI elements,
processing the first UI element by the LLM by:
generating a dynamic descriptor prompt for the LLM, wherein the dynamic descriptor prompt includes:
an instruction to generate a dynamic descriptor based on the first UI element, and
an input including the first UI element, and processing, by the LLM, the dynamic descriptor prompt, to obtain a
first dynamic descriptor corresponding to the first UI element,
and
adding the first dynamic descriptor to a first descriptor field of the first UI element of the second subset of UI elements.

5. The method of any preceding claim, further comprising:
populating the plurality of UI elements with data values by:
sending a first data field of a first UI element of the plurality of UI elements to an enterprise application,
processing, by the enterprise application, the first data field to obtain a first data value, and
adding, by the enterprise application, the first data value to the first data field.

6. The method of any preceding claim, further comprising transmitting the UI document by:
generating the UI document,
wherein the UI document includes the plurality of populated UI elements, and
wherein the plurality of populated UI elements each includes at least one of a static descriptor, a dynamic descriptor, and a data field, and
transmitting the UI document to the client application.

7. The method of any preceding claim, further comprising:
generating the prompt to the LLM, wherein the prompt includes an instruction to generate the insight based on at least one input, wherein the at least one input corresponds to at least one UI element of the plurality of UI elements, by selecting at least one of:
a first static descriptor from the at least one UI element,
a first dynamic descriptor from the at least one UI element, and
a first data field and corresponding first data value from the at least one UI element,
to obtain the at least one input.

8. The method of any preceding claim, wherein transmitting the insight to the client application to be rendered by the client application user interface further comprises:
publishing the insight to at least one publisher-subscriber topic, wherein the client application is subscribed to the at least one publisher-subscriber topic; and
receiving, by the client application, an update from the at least one publisher-subscriber topic, wherein the update includes the insight.

9. A system comprising:
at least one computer processor;
at least one enterprise application;
a large language model (LLM); and
a user interface (UI) generator, executing on the at least one computer processor and configured to cause the at least one computer processor to;
obtain a plurality of UI elements,
add a set of static descriptors to a first subset of the plurality of UI elements,
select a second subset of UI elements from the plurality of UI elements,
process, by the LLM executing on the at least one computer processor, the second subset of UI elements to obtain a set of dynamic descriptors,
add the set of dynamic descriptors to the second subset of UI elements,
populate the plurality of UI elements with data values corresponding to data fields of the plurality of UI elements to obtain a plurality of populated UI elements,
transmit a UI document including the plurality of populated UI elements to a client application,
generate a prompt to the LLM based on the set of static descriptors, the set of dynamic descriptors and the data fields of the plurality of UI elements,
process, by the LLM, the prompt to generate an insight based on the prompt, and
transmit the insight to the client application.

10. The system of claim 9, wherein the UI generator is further configured to cause the at least one computer processor to add the set of static descriptors by:
obtaining a first data field of a first UI element of the first subset of UI elements;
causing the at least one enterprise application executing on the at least one computer processor to process a first set of predefined rules corresponding to the first data field to obtain a first static descriptor of the set of static descriptors; and
adding the first static descriptor to the first UI element of the first subset of UI elements in a first descriptor field of the first UI element of the first subset of UI elements.

11. The system of claim 9 or 10, wherein the UI generator is further configured to cause the at least one computer processor to add the set of dynamic descriptors by:
selecting a first UI element from the second subset of UI elements;
causing the LLM to process the first UI element to obtain a first dynamic descriptor corresponding to the first UI element; and
adding the first dynamic descriptor to a first descriptor field of the first UI element; and
wherein the UI generator can be further configured to cause the at least one computer processor to process the first UI element with the LLM by:
generating a dynamic descriptor prompt for the LLM, wherein the dynamic descriptor prompt includes:
an instruction to generate a dynamic descriptor based on the first UI element, and
an input including the first UI element; and
causing the LLM to process the dynamic descriptor prompt, to obtain the first dynamic descriptor corresponding to the first UI element.

12. The system of any of claims 9 to 12, wherein the UI generator is further configured to cause the at least one computer processor to perform functionality corresponding to the steps of any of claims 5 to 8.

13. A method comprising:
receiving, by a UI generator of a server computing system, a request for a UI document from a client application;
obtaining a plurality of user interface (UI) elements by the UI generator;
adding a set of static descriptors to a first subset of the plurality of UI elements;
selecting a second subset of UI elements from the plurality of UI elements;
processing the second subset of UI elements with a large language model (LLM) to obtain a set of dynamic descriptors;
adding the set of dynamic descriptors to the second subset of UI elements;
populating the plurality of UI elements with data values corresponding to data fields of the plurality of UI elements to obtain a plurality of populated UI elements;
transmitting the UI document including the plurality of populated UI elements to the client application; and
rendering, by a client application user interface of the client application, the UI document.

14. The method of claim 13 further comprising:
generating a prompt to the LLM based on the set of static descriptors, the set of dynamic descriptors and the data fields of the plurality of UI elements;
processing the prompt by the LLM to generate an insight based on the prompt; and
transmitting the insight to the client application.

15. The method of claim 14, further comprising:
transmitting the insight to the client application by:
publishing the insight to at least one publisher-subscriber topic, wherein the client application is subscribed to the at least one publisher-subscriber topic, and
receiving, by the client application, an update from the at least one publisher-subscriber topic, wherein the update includes the insight; and
rendering, by the client application user interface of the client application, the insight.
